# EUROPEAN PATENT APPLICATION

(11) **EP 3 537 284 A1**
(43) Date of publication of application: **11.09.2019**
(21) Application number: 18160766.4
(22) Date of filing: 08.03.2018
(51) Int. Cl.: G06F 3/16

(54) **DEVICE AND METHOD FOR CONTROLLING A DEVICE USING VOICE INPUTS**

(71) Applicant: Vestel Elektronik Sanayi ve Ticaret A.S., 45030 Manisa (TR)
(72) Inventor: KÍRÍSKEN,, Barbaros, 45030 Manisa (TR)
(74) Representative: Flint, Adam

(57) **Abstract**

A method and user device are provided for using voice inputs to control the user device (100). A speech mode of the user device (100) is activated when an activation command (108) is received at the user device (100) from a user (106) of the user device (100). Activating the speech mode of the user device (100) comprises displaying, on a display screen (102) of the user device (100), one or more application icons (104) each associated with a respective application of the user device (100). Each application icon (104) is displayed with a respective voice tag (110) assigned to that application icon (104).

## Description

### Technical Field

The present disclosure relates to a user device and a method of using voice inputs to control the user device.

### Background

Many user devices, particularly portable devices such as so-called "smart phones" or tablets have a display screen. The display screen can function as a user interface, e.g. a touch screen, allowing a user of the user device to interact with and control the device using the display screen. Since users are often interacting with the display screen by using their fingers, or perhaps a stylus, the user interface displayed by the display screen (i.e. a graphical user interface) is arranged so as to be easily controlled with fingers or a stylus.

Many user devices also enable the user to interact with the device by way of voice inputs. For example, a user may speak a predetermined voice command which is picked up by a microphone of the device. If the device interprets the voice command correctly, an action associated with the voice command may be performed.

### Summary

According to a first aspect disclosed herein, there is provided a method of using voice inputs to control a user device, the method comprising: receiving, at the user device, an activation command from a user of the user device; and activating a speech mode of the user device in response to receiving the activation command, wherein activating the speech mode of the user device comprises displaying, on a display screen of the user device, one or more application icons each associated with a respective application of the user device, and wherein each application icon is displayed with a respective voice tag assigned to that application icon.

An advantage of this is that the speech mode provides a more user friendly experience for the user. The applications (e.g. software applications) installed on the user device and associated with the application icons can be more easily controlled using voice inputs. Each application icon (and therefore each application) is assigned its own voice tag (which may be, for example, a simple one-syllable word). The user can therefore control the user device to perform actions such as, for example, opening a particular application, by speaking the voice tag assigned to that application.

In an example, the method comprises: receiving, at the user device, a voice input from the user of the user device, wherein the voice input comprises one of the voice tags assigned to a displayed application icon; and performing an action with the application associated with that application icon.

In an example, activating the speech mode of the user device comprises at least one of: (i) adjusting the number of application icons displayed on the display screen, (ii) adjusting the size of one or more application icons displayed on the display screen, and (iii) rearranging the order of the application icons displayed on the display screen.

In an example, one or more voice tags assigned to the respective application icons are defined by the user device.

In an example, the activation command is a voice input comprising one or more predetermined activation words.

In an example, each voice tag assigned to a respective application icon is at least one of: (i) a single word, (ii) a single syllable, and (iii) a single letter.

According to a second aspect disclosed herein, there is provided a user device comprising: a voice input configured to receive voice inputs; a display screen configured to display one or more application icons each associated with a respective application of the user device; and a controller configured to determine if an activation command has been received from a user of the user device, and in response to receiving the activation command, activate a speech mode of the user device, and wherein activating the speech mode comprises controlling the display screen to display each application icon with a respective voice tag assigned to that application icon.

In an example, the controller is configured to: determine if a received voice input comprises one of the voice tags assigned to a displayed application icon; and cause an action to be performed with the application associated with that application icon.

In an example, activating the speech mode comprises controlling the display screen to perform at least one of: (i) adjust the number of application icons displayed on the display screen, (ii) adjust the size of one or more application icons displayed on the display screen, and (iii) rearrange the order of the application icons displayed on the display screen.

In an example, the controller is configured to define the voice tag assigned to a respective application icon.

In an example, the controller is configured to display each voice tag as at least one of: (i) a single word, (ii) a single syllable, and (iii) a single letter.

In an example, the user device comprises a user interface configured to receive physical inputs, wherein the activation command is a physical input.

In an example, the user device is a mobile device.

In an example, the controller is configured to: determine whether or not the received voice input comprises a voice tag; and if the received voice input does not comprise the voice tag, process the received voice input using natural speech recognition.

According to a third aspect disclosed herein, there is provided a computer program comprising instructions such that when the computer program is executed on a computing device, the computing device is arranged to carry out a method according to any of the method steps disclosed herein.

### Brief Description of the Drawings

To assist understanding of the present disclosure and to show how embodiments may be put into effect, reference is made by way of example to the accompanying drawings in which:
Figure 1 shows schematically an example of a speech mode of the user device being activated in response to receiving an activation command;
Figure 2 shows schematically an example of a user device performing an action with an application in response to receiving a voice tag;
Figure 3 shows schematically an example of an example user interface displayed by a display screen whilst the speech mode is activated;
Figure 4 shows schematically a block diagram of a user device for receiving voice inputs and controlling a display screen of the user device;
Figure 5 shows schematically an example of voice tags assigned to application features and adjustment features; and
Figure 6 shows a flow chart of an example embodiment disclosed herein.

### Detailed Description

User devices typically allow the user to download and install a wide variety of software applications, on top of the applications pre-installed on the device by the manufacturer. Each application typically has its own application icon which is displayed on the display screen of the user device, usually on one or more of the device's "home screens". There may be application icons that simply start or open the corresponding software application. There may also be application icons that are "short-cuts", for example a short-cut to a website which causes a browser to open and connect to that website, or a short-cut to a particular document which causes a document editor to open and then open the particular document, etc. The user device may therefore display many different application icons. Additionally, each application has a title, e.g. a messaging application may be called "Messages". Some applications may have a title consisting of multiple words and/or numbers. Two or more applications may have similar sounding titles, e.g. they may have titles that rhyme with one another.

As mentioned above, user devices are usually designed such that the display screen displays the application icons in a way which provides a user experience tailored to touch operation. This presents several problems when the user wishes to control the user device using voice inputs instead of physical inputs. One problem is that if the application has a long title (i.e. many words, syllables, etc.), the time taken for the user to speak the title increases. A related problem is that the likelihood of the user device not correctly receiving or interpreting one or more of the words increases. A further problem is that if two or more applications have similar sounding titles, the chances of the user device confusing the two applications increases. These problems can be frustrating for the user, particularly if the user wishes to perform an operation quickly. For example, the user may wish to quickly open up an application such as, for example, a video recording application for controlling the device's camera, in order to capture an event.

To provide a better user experience, in accordance with the present disclosure a speech mode of the user device is activated in response to a particular activation command. When the speech mode is triggered, each application icon is assigned its own voice tag, with each voice tag being displayed with its assigned application such that the user can use (i.e. say) the voice tag to open or otherwise control a particular application.

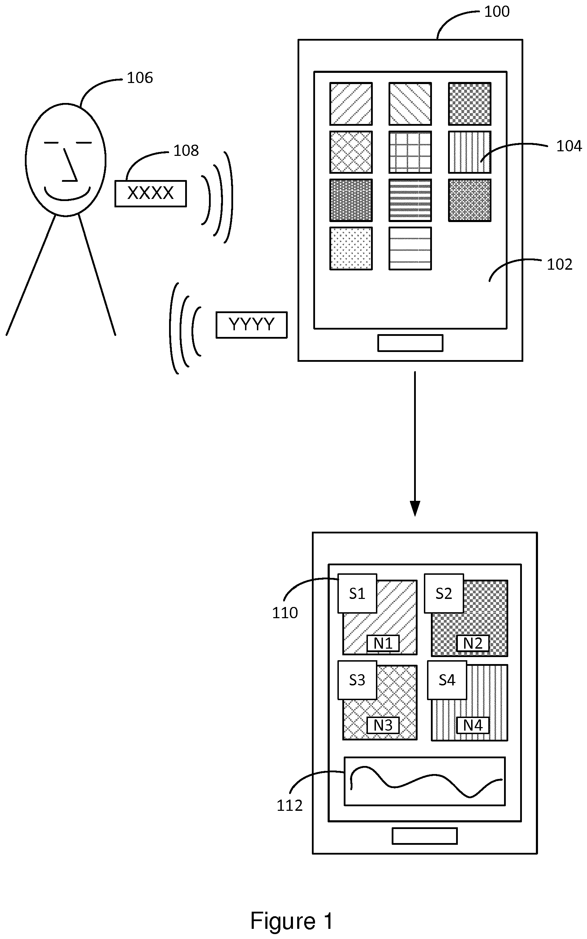

Figure 1 illustrates an example user device 100. The user device 100 may in general be any device with a display screen 102. For example, the user device 100 may be a media device such as a television set, a personal computing device such as a laptop or desktop or tablet computer, a video game console, a cellular phone (including a so-called "smart phone"), a dedicated media player (e.g. an MP3 or similar player), a wearable communication device (including so-called "smart watches"), etc. Here, a smart phone is a mobile (cellular) phone with an operating system and an integrated mobile broadband cellular network connection for voice and data communication. A smart phone typically enables the user to have Internet access and typically includes a Web browser and one or more of Wi-Fi connectivity and Bluetooth connectivity. Examples described herein are of particular benefit in mobile devices, such as smart phones.

As shown in Figure 1, the display screen 102 is configured to display application icons 104 associated with software applications running on or otherwise available on or via the user device 100. For example, some applications may be pre-installed software such as a web browser, an email client, a calendar, etc. There may also be applications relating to the functionality of the device 100 itself, such as volume control, display control (e.g. brightness, contrast and colour of the display screen 102), network settings, etc. Applications may also be installed by a user of the device, e.g. from a so-called "app store", such applications including for example games, instant messaging applications, social media platforms, music streaming services, etc. Each application has an associated application icon 104 which is displayed on the display screen 102. Each application icon 104 serves as a link to a respective application. The application icons 104 may be displayed on a so-called "home screen" or "start screen" of the user device 100, which is usually the main screen of the operating system running on the user device 100. For example, the user device 100 of Figure 1 is shown to display a home screen with eleven application icons 104 displayed in a grid configuration.

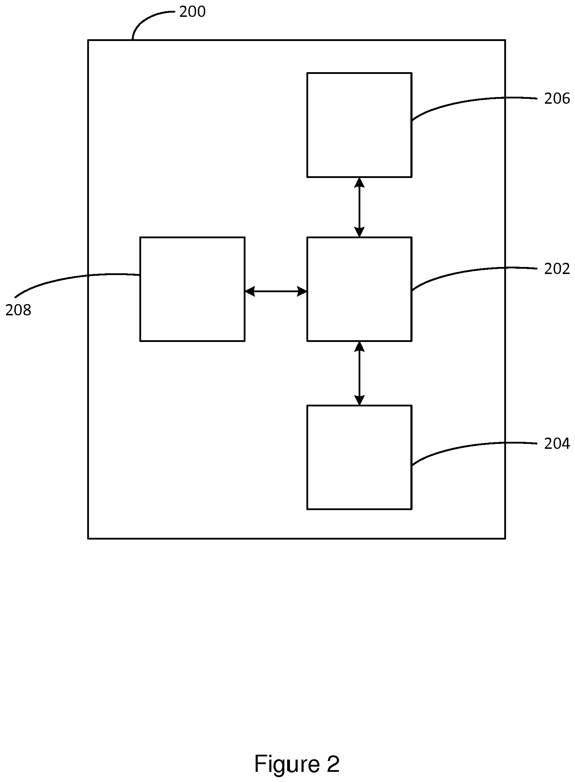

An example user device 200 will now be described in more detail with reference to Figure 2. Figure 2 illustrates an example control system for controlling the user device 200. The user device 200 has a controller 202, such as a processor, operatively coupled to a user interface 204 of the user device 200. The user device 200 has at least one device for receiving voice input such as, for example, a microphone 206. The user interface 204 may be for example a display in the form of a display screen 208 for receiving inputs from the user. For example, the user interface 204 may comprise a touch screen, or a point-and-click user interface comprising a mouse, track pad, or tracker ball or the like. The user interface 204 is configured to receive inputs from a user of the user device 200. For example, the display screen 208 is configured to receive touch inputs or inputs from a device such as a stylus. The microphone 206 is configured to receive voice inputs from the user.

Whilst not shown in Figure 2, the controller 202 may also be operatively coupled to a transceiver for communicating via any suitable medium. For example, the transceiver may be a wireless transceiver, e.g. a radio transceiver for communicating via a cellular radio channel (though other forms are not excluded, e.g. an infrared transceiver). The transceiver may comprise a Wi-Fi, Bluetooth, etc. interface for enabling the user device 200 to communicate wirelessly directly with a different user device. Additionally or alternatively, the wireless transceiver 206 may communicate with another user device via a wireless router or a server (not shown), for example, over a local area network such as a WLAN or a wide area network such as the internet. The controller 202 may also be operatively coupled to a camera (not shown) which is configured to capture images, e.g. of the user.

With reference to Figure 1, in examples described herein, the user device 100 is configured to receive an activation command 108 from the user 106. In response to receiving the activation command 108, a speech mode is activated. When the speech mode is activated, the controller causes the display screen 102 to display the application icons 104 with a respective voice tag 110. Each application icon 104 is assigned its own voice tag 110. For example, as illustrated in Figure 1, applications N1, N2, N3 and N4 are assigned voice tags S1, S2, S3 and S4 respectively. An advantage of this is that the user is provided with a quick and easy way of verbally identifying a particular application.

The voice tags 110 may be displayed as at least partially overlapping their respective application icons 104. An advantage of this is that the voice tags 110 are easily visually associated with a respective application icon 104. In some examples, the voice tags 110 are opaque or only partially transparent, with the application icon 104 showing underneath the voice tag 110. The voice tags 110 may instead be positioned around the application icons 104, e.g. above or below the application icon 104, or to the left or right of the application icon 104. As an option, the voice tag 110 may be displayed in place of the application's title.

In some examples, each application is assigned a unique voice tag 110. The voice tag 110 may be derived from an application's title, e.g. a shortened version of the title.

In other examples, only the application icons 104 that are displayed on the display screen 102 at the same time at a particular instant of time (e.g. on the same "home screen") have unique voice tags 110. In an example of this, each voice tag 110 may correspond to a numerical position of the application icon 104 in a grid-like configuration on the display screen 102, e.g. voice tags "1", "2", "3", etc. The numbering may restart for each home or other display screen that is displayed at any particular instant of time. An advantage of this is that the user may be able to determine what an application icon's voice tag 110 is without actually seeing the voice tag 110, or at least without being able to see the voice tag 110 clearly enough to read what it says. For example, the user device 100 may be positioned relatively far away from the user but close enough to see that a desired application is positioned where application icons 104 are assigned the voice tag "3", e.g. top right corner of the display screen 102 when the applications are displayed in a 3xN grid.

The voice tags 110 may be assigned by the user device 100 itself. For example, the user device 100 may assign the voice tag 110 based on a position of the application icon 104, as discussed above. In another example, the user device 100 may assign a voice tag 110 based on the title of the application. For example, the user device 100 may shorten the title of an application to form a simplified version of the title (e.g. the first syllable or word). In another example, the title may be defined using the first one or two letters of the application's title. For example, voice tags 110 such as "FACE", "WHAT", "M" and "S" may be assigned to application icons 104 representing applications for "FACEBOOK", "WHATSAPP", "MESSAGES" and "SMS" (short message service) respectively. Symbols, such as @ (pronounced "at"), # (pronounced "hash"), * (pronounced "star") may also be used as voice tags 110. An advantage of this is that the user device 100 may define voice tags 110 that are easily associated with an application and/or that are quick and easy to say. Another advantage is that the user device 100 can ensure that each voice tag 110 displayed on the display screen 102 is unique.

Additionally or alternatively, one or more voice tags 110 may be assigned by the user. User-defined voice tags 110 may, in some cases, replace a device-defined voice tag 110 assigned to the same application icon 104. The user may define a voice tag 110 by providing a voice or text input. That is, the user device 100 may say a particular word or letter, for example, which is then converted into text by the user device 100. The user device 100 provides the option for the user to save and assign the voice tag 110 with a particular application. The word or letter, etc. is then displayed as a voice tag 110 with that application icon 104 if the speech mode is activated. Similarly, the user may use the user interface of the user device 100 (e.g. a touch screen keyboard or a physical keyboard) to enter the voice tag 110. An advantage of this is that the user may assign voice tags 110 to applications icons that the user can remember for future use.

Each voice tag 110 may be for example a single word, a single syllable and/or a single letter. That is, all of the voice tags 110 displayed on the display screen 102 at the same time may be, for example, a single letter. In another example, a mixture of single word, single symbol and/or single letter voice tags 110 may be displayed at the same time. For example, with reference to Figure 1, voice tag S1 may be a single word, e.g. "FACE", voice tag S2 may be a single word "WHAT", voice tag S3 may be a single letter "M" and voice tag S4 may be a single letter "S". In this example, each voice tag 110 is also a single syllable. Other combinations are possible. An advantage of this is that each voice tag 110 is a simple, easy to pronounce word or letter. This reduces the likelihood of the user device 100 incorrectly interpreting a received voice input. Another advantage of using single syllable voice tags 110 is that it reduces the time taken to say the voice tag 110, which in turn reduces the time taken for the user device 100 to receive the whole voice tag 110, and therefore to process the voice tag 110 to control an application.

In addition to displaying the assigned voice tags 110 when the speech mode is activated, the user device 100 may also cause the display screen 102 to modify one or more aspects of the displayed application icons 104. For example, when the speech mode is activated, the number of application icons 104 displayed on the display screen 102 may be reduced. This is shown in the example of Figure 1, where eleven application icons 104 were displayed prior to the speech mode was activated, but upon activating the speech mode, the number of application icons 104 was reduced to four. The user device 100 may reduce the number of application icons 104 by one or more, up until there is only one application icon 104 remaining. Alternatively, the number of application icons 104 may be increased.

In some examples, removing application icons 104 from the display screen 102 is based on the usage history of one or more application icons 104. For example, the applications used least often are removed whilst the application used most often remain. In another example, the applications with the most amount of voice-enabled features remain and the application icons 104 with the least amount of voice-enabled features are removed. As another example, the keeping/removal of application icons 104 is based on the current time and/or day. For example, applications used most often during the morning may be displayed if the speech mode is activated in the morning. Similarly, the decision may be based on the current location of the user device 100. An advantage of this is that only the most useful or relevant application icons 104 are displayed, thus resulting in the user being able to control those applications in less time. This also means that fewer distinct voice tags 110 are required for the application icons 104 that remain on the display screen 102, making it less likely that the user 106 or the device 100 itself will confuse one voice tag 110 with another voice tag 110 when a voice tag 110 is spoken by the user 106.

In an example, the application icons 104 removed from the display screen 102 when reducing the number of icons are those that are displayed last, e.g. at the bottom of the display screen 102. For example, if there are nine application icons 104 displayed, the last (bottom) three may be removed.

Additionally or alternatively, when activating the speech mode, the displayed application icons 104 may be increased in size compared with the size of the application icon 104 when displayed whilst not in the speech mode. An advantage of this is that the application icons 104 and their assigned voice tags 110 are easier to see, e.g. when the user is not holding the user device 100 or is relatively far away from the user device 100. Alternatively, the displayed application icons 104 may be reduced in size.

As another option, the order of the displayed application icons 104 may be changed or rearranged when entering the speech mode. The rearrangement may be based on the examples discussed above in relation to reducing the number of displayed application icons 104. That is, the application icons 104 may be rearranged based on, for example, usage history, (number of) voice-enabled features, time, day, location, etc.

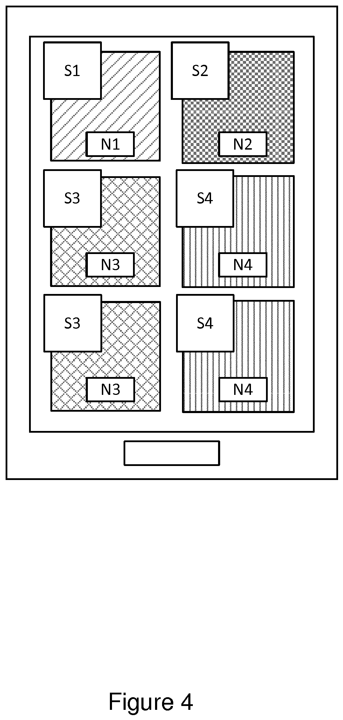

As an optional feature, when in the speech mode the display screen 102 may display a visual indicator 112 of received voice inputs. That is, the visual indicator indicates when voice inputs are being received. This may be in the form of an animated sound wave graphic 112, as shown in Figure 1. An advantage of this is that it helps the user determine if the user device 100 is receiving voice inputs. For example, it may alert the user to the microphone being disabled. On the other hand, Figure 4 illustrates an example of the user device 100 in the speech mode without the visual indicator. An advantage of this is that more application icons 104 and assigned voice tags 110 are available to be used by the user.

The activation command may be, for example, a specific voice command such as a so-called "wake-up" word or phrase. For example, the voice command may be "Hi Device" or the like. The use of wake-up words per se is generally known in the art. In these examples, receiving an activation command is taken to mean receiving the voice command via the voice input (e.g. microphone) and correctly interpreting the voice command as a command to activate the speech mode. For example, speech recognition techniques may be applied by the device 100 to the received voice command to recognise and translate spoken words into text. The voice command is interpreted and processed as an activation command if it contains one or more predetermined activation words. An advantage of this is that the user can activate the speech mode without physically interacting with the user device 100, e.g. by touch.

In some examples, the activation command may be one of the voice tags 110. For example, the user 106 may have knowledge of a voice tag 110 assigned to an application icon 104 (e.g. if the same voice tags are used for the same application icons). As another example, the activation command may be limited to the voice tags 110 currently displayed on the display screen 102.

Additionally or alternatively, the activation input may be a physical input. For example, the user may select a pre-defined activation button on the user interface, e.g. pressing the "home" button a pre-defined number of times. Alternatively, the activation command may be the continued holding of a button or part of the display screen 102 for a predetermined period of time. As another example, the activation command may be the selection of a specific corresponding graphic or icon on the display screen 102.

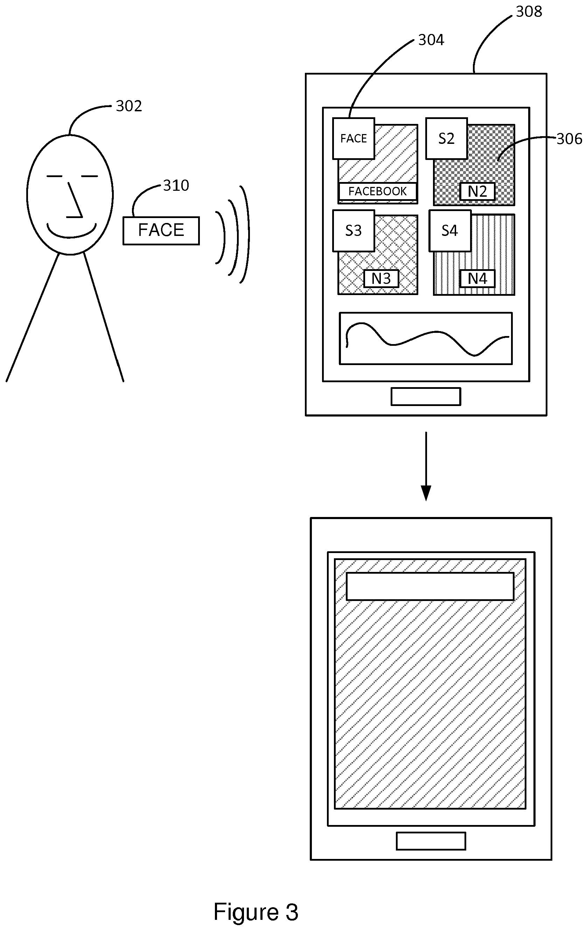

As shown in Figure 3, if a user 302 says one of the voice tags 304 assigned to the displayed application icons 306 and the user device 308 receives and correctly interprets the spoken voice tag 310, the received voice tag may trigger a response from an application. That is, if the user says a voice tag 304, e.g. "A" which has been assigned to application icon A, then an action is performed with application A. In the example of Figure 3, the voice tag "FACE" has been assigned to the "FACEBOOK" application icon 306. When the user device 308 detects the word "FACE", the user device 308 may, for example, open the FACEBOOK application. In some examples, additional or alternative actions may be performed. For example, saying the voice tag 304 may cause the application to display particular details associated with that application such as a time that it was last used, or notifications associated with that application (e.g. a messaging application may show that it has three unread messages).

As well as receiving and processing voice inputs which include voice tags 110, the user device 100 is also able to continue receiving and processing voice inputs which do not include voice tags 110, or voice inputs which include voice tags 110 not intended to result in an action being performed with an application icon associated with a voice tag 110. That is, the user device 100 can be controlled to perform actions, whilst the speech mode is active or inactive, without the use of voice tags 110. For example, it is well known that user devices can respond to questions such as "What is the weather going to be like this afternoon?" When a voice input like this is received, the user device 100 can determine that the words "What", "the", "to", "be", etc., which may be voice tags 110 assigned to application icons 104 (e.g. voice tags "2" or "B", etc.), are not intended to be processed as voice tags 110. An advantage of this is that the user is not prevented from performing any actions whilst the speech mode is active that s/he may have performed whilst the speech mode is not active.

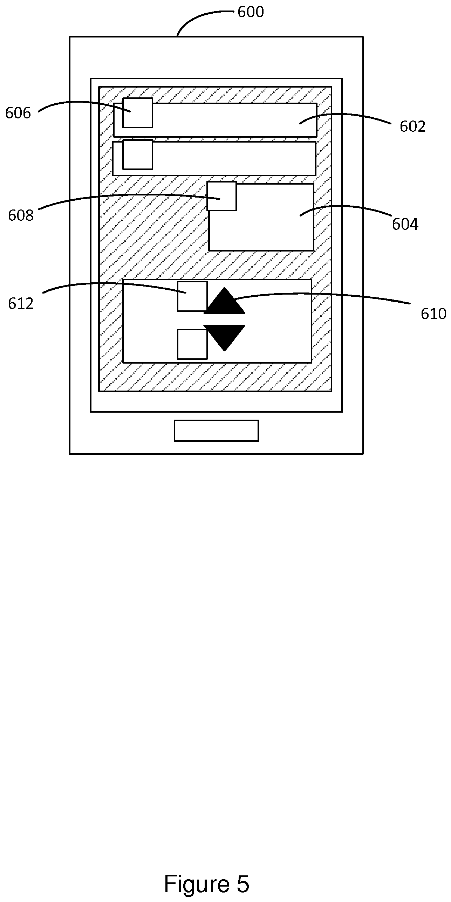

As an additional feature, voice tags may be assigned to features within an application for different parts or sub-parts of that application. For example, voice tags may be assigned to one or more controllable and/or editable features within an application. Figure 5 illustrates an example of a user device 600 displaying an application "in use", i.e. the application is open and being used by a user. In this example, application features 602, 604 are assigned respective voice tags 606, 608. In the illustrative example of Figure 5, the application is a word processing application with a voice tag assigned to each of one or more application features such as, for example, a header, footer, title, image, text portion, etc. So, for example, the user may say "header" or the like, and then the header section 602 opens for (verbal) editing. Similarly, the voice tag 608 assigned to an image 604 may be, for example, "I". The user may say "I" and one or more options for editing the image may be displayed. An advantage of this is that it allows the user to easily control/edit features within an application without physically interacting with the device, e.g. by touch.

Further examples of application features to which a voice tag may be assigned include: command features (e.g. to cause a camera application to capture an image), accessibility features (e.g. to cause the display screen to switch to a mode best suited for users with visual impairments), organisational features (e.g. to sort a list of files alphabetically), etc.

The voice tags assigned to the application features within an application may be distinct from the voice tags 110 assigned to the application icons 104. Alternatively, one or more voice tags 110 may be re-used as a voice tag to be assigned to an application feature.

Voice tags may also be assigned to adjustment features 610 within an application. For example, the user device 600 may display voice tags 612 such as, for example, "Increase", "Decrease", "Brighter", "Darker", etc. to adjust the font size, display screen brightness, etc. Again, these voice tags 612 may be the same as the voice tags 110 assigned to the application icons 104 and/or the application features, or alternatively they may be distinct.

Like the voice tags 110 assigned to the application icons 104, the voice tags assigned to the application features and/or the adjustment features may be user defined and/or defined by the user device 100. Similarly, the voice tags assigned to the application features and/or the adjustment features may be, for example, a single word, a single letter and/or a single syllable.

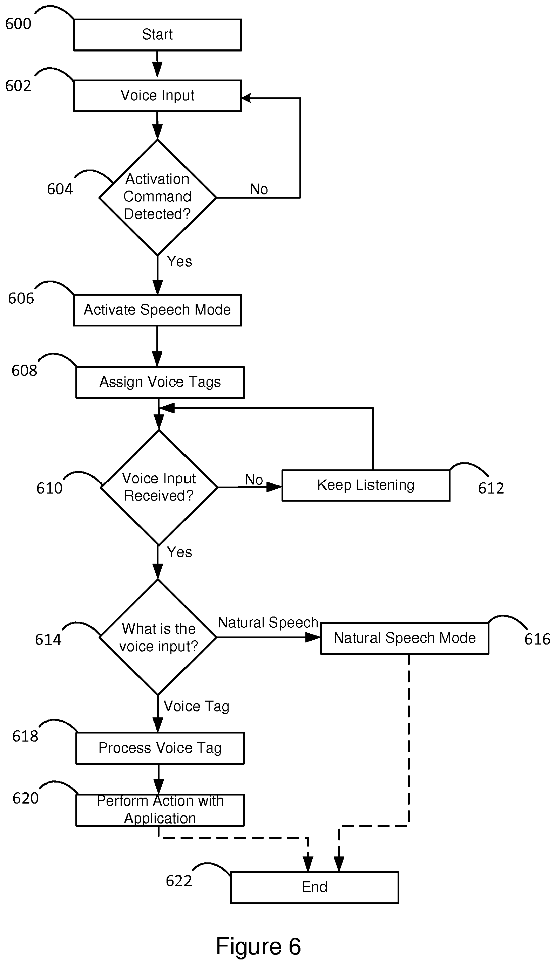

Figure 6 shows a flowchart of an example implementation of the method according to aspects described herein. The method starts at Step 600.

At 602, the user 106 provides a voice input

At 604, the user device 100 determines whether or not the voice input contains an activation command 108, e.g. a "wake-up" word. If the voice input does not contain an activation command 108, the user device 100 continues to listen for an activation command 108.

At 606, a speech mode of the user device 100 is activated if an activation command 108 is detected. When the speech mode is activated, the application icons 104 displayed on the display screen 102 of the user device 100 are displayed along with a respective voice tag 110 assigned to the application icons 104. The voice tags 110 may be assigned to the application icons 104 after the speech mode is activated (as shown at 608) or the voice tags 110 may have been previously assigned.

At 610, the user device 100 determines if a voice input has been received. If a voice input has not been received, the user device 100 continues to listen out for a voice input (as shown at Step 612). In some examples, the speech mode may be deactivated if a voice input is not received within a predetermined period of time after the speech mode was activated.

At 614, if a voice input is received, the user device 100 determines whether or not the voice input is a voice tag 110. If the voice input is not a voice tag 110, the user device 100 processes the voice input using natural language processing (as shown at 616).

At 618, if the voice input is a voice tag 110, the user device 100 processes the voice tag 110 and at 620, the user device 100 performs an action with an application associated with the application icon 104 with which the received voice tag is assigned.

Finally, at 622 the method ends.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of using voice inputs to control a user device (100), the method comprising:
receiving (604), at the user device (100), an activation command (108) from a user (106) of the user device (100); and
activating (606) a speech mode of the user device (100) in response to receiving (604) the activation command (108), wherein activating (606) the speech mode of the user device (100) comprises displaying, on a display screen (102) of the user device (100), one or more application icons (104) each associated with a respective application of the user device (100), and wherein each application icon (104) is displayed with a respective voice tag (110) assigned to that application icon (104).

2. A method according to claim 1, comprising:
receiving (610), at the user device (100), a voice input (602) from the user (106) of the user device (100), wherein the voice input (602) comprises one of the voice tags (110) assigned to a displayed application icon (104); and
performing (620) an action with the application associated with that application icon (104).

3. A method according to claim 1 or claim 2, wherein activating (606) the speech mode of the user device (100) comprises at least one of: (i) adjusting the number of application icons (104) displayed on the display screen (102), (ii) adjusting the size of one or more application icons (104) displayed on the display screen (102), and (iii) rearranging the order of the application icons (104) displayed on the display screen (102).

4. A method according to any of claims 1 to 3, wherein one or more voice tags (110) assigned to the respective application icons (104) are defined by the user device (100).

5. A method according to any of claims 1 to 4, wherein the activation command (108) is a voice input comprising one or more predetermined activation words.

6. A method according to any of claims 1 to 5, wherein each voice tag (110) assigned to a respective application icon (104) is at least one of: (i) a single word, (ii) a single syllable, and (iii) a single letter.

7. A user device (100) comprising:
a voice input (206) configured to receive voice inputs;
a display screen (102) configured to display one or more application icons (104) each associated with a respective application of the user device (100); and
a controller (202) configured to determine if an activation command (108) has been received from a user (106) of the user device (100), and in response to receiving the activation command (108), activate a speech mode of the user device (100), and wherein activating the speech mode comprises controlling the display screen (102) to display each application icon (104) with a respective voice tag (110) assigned to that application icon.

8. A user device (100) according to claim 7, wherein the controller (202) is configured to:
determine if a received voice input comprises one of the voice tags (110) assigned to a displayed application icon (104); and
cause an action to be performed with the application associated with that application icon (104).

9. A user device (100) according to claim 7 or claim 8, wherein activating the speech mode comprises controlling the display screen (102) to perform at least one of:
(i) adjust the number of application icons (104) displayed on the display screen (102),
(ii) adjust the size of one or more application icons (104) displayed on the display screen (102), and (iii) rearrange the order of the application icons (104) displayed on the display screen (102).

10. A user device (100) according to any of claims 7 to 9, wherein the controller (202) is configured to define the voice tag (110) assigned to a respective application icon (104).

11. A user device (100) according to any of claims 7 to 10, wherein the controller (202) is configured to control the display screen (102) to display each voice tag (110) as at least one of: (i) a single word, (ii) a single syllable, and (iii) a single letter.

12. A user device (100) according to any of claims 7 to 11, wherein the user device (100) comprises a user interface (204) configured to receive physical inputs, wherein the activation command (108) is a physical input.

13. A user device (100) according to any of claims 7 to 12, wherein the user device (100) is a mobile device.

14. A user device (100) according to any of claims 7 to 13, wherein the controller (202) is configured to:
determine whether or not the received voice input comprises a voice tag (110); and
if the received voice input does not comprise the voice tag (110), process the received voice input using natural speech recognition.

15. A computer program comprising instructions such that when the computer program is executed on a computing device, the computing device is arranged to carry out a method according to any of claims 1 to 6.
